# EUROPEAN PATENT APPLICATION

(11) **EP 4 674 329 A1**
(43) Date of publication of application: **07.01.2026**
(21) Application number: 24186342.2
(22) Date of filing: 03.07.2024
(51) Int. Cl.: A47J 31/44, A47J 31/42

(54) **IMAGED-BASED METHOD AND SYSTEM FOR CONTROLLING A COFFEE PREPARATION SYSTEM**

(71) Applicant: Versuni Holding B.V., 1082 MD Amsterdam (NL)
(72) Inventor: SINNEMA, Anke Gerda, 1082 MD Amsterdam (NL); HARINGSMA, Jelmer, 1082 MD Amsterdam (NL); LOOPSTRA, Kasper Roelof, 1082 MD Amsterdam (NL)
(74) Representative: Vollering, Stefanus Franciscus Maria

(57) **Abstract**

Provided is a processing system (5) for controlling a coffee preparation system (1) based on packaging and/or consumer labelling of a given coffee beans-comprising product. The processing system is configured to receive image data obtained by capturing image(s) of the packaging and/or consumer labelling, and to compare the image data to pre-existing image data of packaging and/or consumer labelling of each of a plurality of coffee beans-comprising products. The comparing implemented by the processing system comprises identifying a subset of the plurality of coffee beans-comprising products whose packaging and/or consumer labelling is most similar to that of the given coffee beans-comprising product. The processing system generates, based on the identified subset, at least one output signal for controlling the coffee preparation system. Also provided is a coffee preparation assembly comprising the processing system and the coffee preparation system. Further provided is a method and related computer program for controlling such a coffee preparation system.

## Description

### FIELD OF THE INVENTION

The invention relates to a method, and a related computer program, for controlling a coffee preparation system.

The invention also relates to a processing system for controlling such a coffee preparation system.

The invention further provides a coffee preparation assembly comprising the processing system and the coffee preparation system. Such a coffee preparation assembly can comprise, for example, a beverage brewing assembly and/or a grinding assembly for grinding coffee beans, with one or both of the beverage brewing assembly and the grinding assembly being controllable by the processing system.

### BACKGROUND OF THE INVENTION

There are many different types of commercially available coffee preparation systems, for example coffee preparation systems in the form of a beverage machine, and in the form of a standalone coffee grinder (with the term "standalone" meaning that the coffee grinder is not itself included in a beverage machine).

In a manual espresso machine, the user fills a brewing vessel, which brewing vessel is included in a so-called portafilter, with ground coffee. The user then tamps the ground coffee within the brewing vessel with sufficient pressure to create a so-called puck of ground coffee. The brewing vessel containing the puck is mounted to the coffee machine, usually via a bayonet-type coupling. Next, the coffee machine drives hot water through the puck and the resulting coffee is dispensed via a spout that is typically integrated in the portafilter. After brewing, the user is required to disconnect the portafilter from the coffee machine, and empty the portafilter, throwing away the used ground coffee.

There are also manual espresso machines with an integrated grinder. In such machines, the portafilter may be movable by the user between a first position where it receives ground coffee and a second position where coffee is brewed. Tamping may be done manually or via a manually operated lever.

In a fully automatic coffee machine, all of the above-mentioned steps are done automatically, in one and the same machine. The machine comprises a bean container and a grinder, to make the ground coffee. These grounds are transported into a brewing vessel and tamped automatically, via a piston that may be hydraulically actuated or actuated via an electromotor. Next, hot water is driven through the ground coffee in the brewing vessel, coffee is brewed and dispensed, and the used ground coffee is discharged from the brewing vessel into a waste bin within the machine. By these steps being implemented automatically, the fully automatic coffee machine can save the user time. Moreover, consistent results are achievable due to the machine being capable of implementing the steps more repeatably than a user.

Ideally, the coffee preparation system, such as the fully automatic coffee machine or the above-mentioned standalone coffee grinder, should be able to recommend or actively optimize the grind settings and/or brew settings, or suggest suitable recipes, based on what type of beans is being used. This is due to the availability of different coffee beans that should be treated differently from each other.

For this reason, some coffee preparation systems require the user to manually enter relevant bean information. However, this manual entry can be prone to errors, and the user may not always understand what information they are required to enter.

Alternatively, the system may be equipped with sensors to detect the bean properties and/or the coffee beans may be supplied with machine-readable tags or codes, such as a bar code, QR code, RFID tag, NFC label, etc. However, this solution requires cooperation of bean suppliers to provide such machine-readable tags or codes on their products, e.g. on the packaging containing their coffee beans.

### SUMMARY OF THE INVENTION

The invention is defined by the claims.

According to examples in accordance with an aspect of the invention, there is provided a computer-implemented method of controlling a coffee preparation system based on packaging and/or consumer labelling of a given coffee beans-comprising product, the method comprising: receiving image data obtained by capturing image(s) of at least part of the packaging and/or consumer labelling; comparing the image data to pre-existing image data of packaging and/or consumer labelling of each of a plurality of coffee beans-comprising products, the comparing comprising identifying a subset of the plurality of coffee beans-comprising products whose packaging and/or consumer labelling is most similar to that of the given coffee beans-comprising product; and generating, based on the identified subset, at least one output signal for controlling the coffee preparation system.

Despite the packaging and/or consumer labelling included in a given coffee beans-comprising product, the consumer may struggle to identify the product, and in particular can encounter difficulty in understanding characteristic(s) of the coffee beans included in the product. This can hamper the consumer's attempts to prepare coffee using the coffee beans included in the product.

The computer-implemented method according to the present disclosure accordingly assists the consumer to prepare coffee by helping the user to determine the given coffee beans-comprising product they are intending to use to prepare the coffee using a comparison between image data obtained by capturing image(s) of (at least part of) the packaging and/or consumer labelling and pre-existing image data of packaging and/or consumer labelling of each of a plurality of coffee beans-comprising products. The comparison assists the user to determine the given coffee beans-comprising product they are intending to use via identification of a subset of the plurality of coffee beans-comprising products whose packaging and/or consumer labelling is most similar to that of the given coffee beans-comprising product.

This approach can be less burdensome on the consumer than conventional solutions involving manual entry of information from the consumer, and also benefits from removing the requirement for the bean supplier to include specific machine-readable tags or codes on the given coffee beans-comprising product.

It is noted that the subset of the plurality of coffee beans-comprising products identified to be most similar to that of the given coffee beans-comprising product can be a single coffee beans-comprising product of the plurality of coffee beans-comprising products whose packaging and/or consumer labelling is identified to be most similar to that of the given coffee beans-comprising product. In such embodiments, the single coffee beans-comprising product of the plurality of coffee beans-comprising products may, for example, be presented to the consumer, e.g. via a user interface, and the consumer may select a user-selectable option that confirms correct identification of the given coffee beans-comprising product or may select a different user-selectable option that indicates incorrect identification of the given coffee beans-comprising product.

In other cases, the subset of the plurality of coffee-beans comprising products is a group of coffee-beans comprising products whose number is less than a total number of the plurality of coffee-beans comprising products. In such embodiments, the group may, for instance, be presented to the consumer, e.g. in the form of a plurality of user-selectable options provided via a user interface, and the consumer may select the coffee beans-comprising product of the group that corresponds, or at least most closely corresponds, to the given coffee beans-comprising product.

The term "pre-existing" in the context of the pre-existing image data can be regarded as meaning that the image data of the packaging and/or consumer labelling of the plurality of coffee beans-comprising products have been acquired prior to acquisition of the image data obtained by capturing image(s) of (at least part of) the packaging and/or consumer labelling of the given coffee beans-comprising product.

The pre-exisiting image data may be stored on a database and/or may be obtained from website(s).

The generating of the control signal(s) can make use of the identified subset in any suitable manner. In some embodiments, the pre-existing image data is included in a database, which database further comprises stored information relevant to coffee beans included in each of the plurality of coffee beans-comprising products. In such embodiments, the generating of the at least one output signal for controlling the coffee preparation system can be based on the stored information for the identified subset.

In some embodiments, the method comprises extracting at least one coffee bean characteristic of the coffee beans based on the identified subset, with the generating of the at least one output signal being based on the at least one coffee bean characteristic.

The stored information can include, for example, at least one coffee bean characteristic of the coffee beans of each of the plurality of coffee beans-comprising products.

In such embodiments, the stored information for the identified subset can include, for example, the at least one coffee bean characteristic of the coffee beans of the identified subset.

Extracting the coffee bean characteristic(s) of the identified subset can mean that characteristic(s) pertinent to grinding and/or brewing factor(s) for the coffee beans included in the given coffee beans-comprising product can be determined and used to control the coffee preparation system.

The coffee bean characteristic(s) can comprise, for example, one or more selected from a coffee bean type, e.g. Arabica, Robusta or blend, a flavor descriptor indicative of a flavor of the coffee beans, a degree of roasting or roast level descriptor(s), a flavor intensity, an oil content, a country of origin, and a level of decaffeination, e.g. an indication of whether or not the coffee bean is decaffeinated (noting that so-called "half-caf" coffee beans are available in which the caffeine content is reduced by approximately half compared to the non-decaffeinated beans). Such coffee bean characteristics may be particularly relevant in terms of determining how coffee should be prepared, e.g. the manner in which coffee beans are ground and/or coffee is brewed.

It is noted that the coffee bean type can, for example, be indicated by "100% Arabica"/single origin.

Particular mention is made of the coffee bean characteristic(s) comprising a degree of roasting or roast level descriptor(s).

The degree of roasting/roast level descriptor(s) may represent key characteristics of the coffee bean for informing the consumer as to how coffee should be prepared, e.g. the manner in which coffee beans are ground and/or coffee is brewed, using the coffee beans.

In some embodiments, the at least one output signal comprises at least one brewing assembly control signal for controlling one or more brewing parameters of a beverage brewing assembly based on the identified subset. Thus, brewing parameter(s) can be controlled in light of what is determined, via the image data comparison, to constitute the given coffee beans-comprising product that the consumer is intending to use to prepare coffee, e.g. so that the consumer can consume coffee brewed in a manner consistent with that envisaged by the manufacturer of the given coffee beans-comprising product.

In some embodiments, the brewing assembly control signal(s) control a pump, a heater and/or valve(s) included in the beverage brewing assembly using the brewing assembly control signal(s) generated based on the identified subset.

The one or more brewing parameters can, for example, include at least one selected from a brew time, a pre-infusion time, a quantity, e.g. volume, of water, a temperature of the water, a flow rate of the water, a temperature-flow profile, and a pressure of the water used to brew the beverage using the coffee beans of the given coffee beans-comprising product. Controlling such brewing parameters can assist brewing of coffee in a manner consistent with what is determined, via the image data comparison, to constitute the given coffee beans-comprising product that the consumer is intending to use to prepare coffee.

For example, the coffee beans included in the given coffee beans-comprising product may be dark roast coffee beans apposite for brewing an espresso. In such a non-limiting example, the brewing parameter(s) may be selected, based on the identified subset indicating dark roast coffee beans being included in the given coffee beans-comprising product, to prepare an espresso, in other words using a volume of water (e.g. 29.5 to 37 mL for a single shot), a temperature of the water (e.g. between 92°C and 96°C), and a pressure of the water (e.g. about 9 bar) selected for preparing an espresso.

As an alternative or in addition to controlling the beverage brewing assembly via the brewing assembly control signal(s), the at least one output signal can comprise at least one grinding assembly control signal for controlling one or more grinding parameters of the grinding assembly for grinding coffee beans based on the identified subset. Thus, grinding parameter(s) can be controlled in light of what is determined, via the image data comparison, to constitute the given coffee beans-comprising product that the consumer is intending to use to prepare coffee, e.g. so that the coffee beans are ground in a manner consistent with that envisaged by the manufacturer of the given coffee beans-comprising product.

For example, the identified subset may be associated with a size of beverage, and an amount of ground coffee provided by the grinding assembly for preparing a beverage of that size may be based on the thus indicated size of the beverage.

The amount of ground coffee provided by the grinding assembly can be controlled by, for example, controlling a grind time during which the grinding assembly is grinding the coffee beans. For example, the grinding assembly control signal(s) can comprise a motor control signal that controls an electrical motor to rotate grinding member(s) of the grinding assembly for a time period corresponding to the grind time.

Alternatively or additionally, the identified subset may be associated with a light roast for which a smaller particle size is envisaged from grinding of the coffee beans. Conversely, the identified subset may be associated with a dark roast for which a larger particle size is envisaged from grinding of the coffee beans.

In more general terms, the one or more grinding parameters, controllable based on the identified subset, may include a grind size to which the coffee beans are to be ground by the grinding assembly, a grind time during which the coffee beans are ground by the grinding assembly and/or an amount of ground coffee to be provided by the grinding assembly.

As an alternative or in addition to the brewing assembly control signal(s) and/or the grinding assembly control signal(s), the at least one output signal can comprise one or more user interface control signals for controlling a user interface to provide one or more suggestions for preparing coffee, with the suggestion(s) being provided based on the identified subset.

Thus, the user can be guided, via the suggestion(s), to prepare coffee, e.g. to grind the coffee beans and/or to brew coffee, in a manner consistent with what is determined, via the image data comparison, to constitute the given coffee beans-comprising product that the consumer is intending to use to prepare coffee.

The suggestion(s) may, for example, provide advice or recommendations regarding recipe(s) based on the identified subset.

For example, when the identified subset is indicative of dark roast coffee beans, a recipe for a milk-comprising coffee may be suggested (via the suggestion(s)).

Alternatively or additionally, when the identified subset is indicative of light roast coffee beans, a recipe for a cold brew coffee may be suggested (via the suggestion(s)).

The form of the suggestion(s) is not particularly limited. In some embodiments, the one or more suggestions is/are in the form of user-selectable option(s) for controlling the grinding assembly and/or the beverage brewing assembly. In such embodiments, the grinding assembly and/or the beverage brewing assembly may be controlled based on the user-selectable option(s) selected by the user via the user interface.

Alternatively or additionally, the one or more suggestions can include a recommendation as to which bean container, of a plurality of different bean containers included in the coffee preparation system, e.g. in a beverage machine or in a standalone coffee grinder, to fill with the coffee beans of the given coffee beans-comprising product.

Such a recommendation can assist the user to transfer the coffee beans to the bean container most suited to the coffee beans of the given coffee beans-comprising product, for example based on similarity of coffee bean type, degree of roasting or decaffeination level (e.g. decaffeinated or not decaffeinated) to coffee beans taken to be already contained in the bean container.

More generally, the generating of the brewing assembly control signal(s), the grinding assembly control signal(s) and/or the user interface control signal(s), can be based on the stored information for the identified subset.

In some embodiments, the generating of the brewing assembly control signal(s), the grinding assembly control signal(s) and/or the user interface control signal(s) is/are based on the at least one coffee bean characteristic.

The identifying of the subset can be implemented in any suitable manner, e.g. using any suitable image comparison algorithm. In some embodiments, the comparing comprises using an image comparison algorithm to compare text, color(s), and/or layout of the packaging and/or consumer labelling of the at least part of the given coffee beans-comprising product captured in the image data to text, colors and/or layout of the packaging and/or consumer labelling of the plurality of coffee beans-comprising products as provided in the pre-existing image data.

Alternatively or additionally, the identifying of the subset can comprise generating a similarity score for each of the plurality of coffee beans-comprising products and determining which similarity score(s) is/are highest.

In some embodiments, the method comprises using a first layer of a convolutional neural network (convolutional layer) to reduce the number of parameters to be used in the comparison.

In such embodiments, the features of the image data can then be used to compare with a list of features from the database, and the coffee beans-comprising product with the highest similarity score can be determined as corresponding to the given coffee beans-comprising product.

According to another aspect there is provided a computer program comprising computer program code which, when executed on a computing device having a processing system, causes the processing system to perform the method according to any of the embodiments described herein.

One or more non-transitory computer readable media may be provided, which non-transitory computer readable media have a computer program stored thereon, and the computer program comprises computer program code which is configured, when the computer program is run on a processing system, to cause the processing system to implement the method according to any of the embodiments described herein.

In some embodiments, the computer program may be included in an application, in other words an app, for running on a user device, such as a smartphone or tablet computer.

According to yet another aspect there is provided a processing system for controlling a coffee preparation system based on packaging and/or consumer labelling of a given coffee beans-comprising product, the processing system being configured to: receive image data obtained by capturing image(s) of at least part of the packaging and/or consumer labelling; compare the image data to pre-existing image data of packaging and/or consumer labelling of each of a plurality of coffee beans-comprising products, the comparing comprising identifying a subset of said plurality of coffee beans-comprising products whose packaging and/or consumer labelling is most similar to that of the given coffee beans-comprising product; and generate, based on the identified subset, at least one output signal for controlling the coffee preparation system.

In some embodiments, the processing system is configured to generate at least one brewing assembly control signal for controlling one or more brewing parameters of a beverage brewing assembly based on the identified subset, optionally wherein the brewing parameter(s) include(s) at least one selected from a brew time, a pre-infusion time, a quantity, e.g. volume, of water, a temperature of the water, a flow rate of the water, a temperature-flow profile, and a pressure of the water used to brew a beverage using the coffee beans of the given coffee beans-comprising product.

Alternatively or additionally, the processing system may be configured to generate at least one grinding assembly control signal for controlling one or more grinding parameters of a grinding assembly based on the identified subset, optionally wherein the grinding parameter(s) include(s) a grind size to which the coffee beans are to be ground by the grinding assembly, a grind time during which the coffee beans are ground by the grinding assembly and/or an amount of ground coffee to be provided by the grinding assembly.

Alternatively or additionally, the processing system may be configured to generate one or more user interface control signals for controlling a user interface to provide one or more suggestions for preparing coffee, with the suggestion(s) being provided based on the identified subset. For example, the one or more suggestions is/are in the form of user-selectable options for controlling the beverage brewing assembly and/or the grinding assembly; and/or the one or more suggestions include a recommendation as to which bean container, of a plurality of different bean containers included in the coffee preparation system, to fill with the coffee beans of the given coffee beans-comprising product.

Alternatively or additionally, the processing system may be configured to compare, using an image comparison algorithm, text, color(s), and/or layout of the packaging and/or consumer labelling of the at least part of the given coffee beans-comprising product captured in the image data to text, colors and/or layout of the packaging and/or consumer labelling of the plurality of coffee beans-comprising products as provided in the pre-existing image data.

Alternatively or additionally, the processing system may be configured to, when the pre-existing image data is included in a database, which database further comprises stored information relevant to coffee beans included in each of the plurality of coffee beans-comprising products, generate the at least one output signal based on the stored information for the identified subset.

Alternatively or additionally, the processing system may be configured to extract at least one coffee bean characteristic of the coffee beans of the identified subset, and to generate the at least one output signal based on the at least one coffee bean characteristic. The coffee bean characteristic(s) may, for example, comprise one or more selected from a coffee bean type, e.g. Arabica, Robusta or blend, a flavor descriptor indicative of a flavor of the coffee beans, a degree of roasting or roast level descriptor(s), a flavor intensity, an oil content, a country of origin, and a level of decaffeination, e.g. an indication of whether or not the coffee bean is decaffeinated.

According to a further aspect there is provided a coffee preparation assembly comprising: the processing system according to any of the embodiments described herein; and a coffee preparation system controllable by the at least one output signal.

In some embodiments, the coffee preparation system comprises a beverage brewing assembly, e.g. with the beverage brewing assembly being controllable by the brewing assembly control signal(s).

Alternatively or additionally, the coffee preparation system may include a grinding assembly for grinding coffee beans, e.g. with the grinding assembly being controllable by the grinding assembly control signal(s).

Alternatively or additionally, the coffee preparation system may include a user interface, e.g. with the user interface being controllable by the user interface control signal(s).

More generally, embodiments described herein in relation to the method and computer program may be applicable to the processing system, the coffee preparation assembly and/or the coffee preparation system, and embodiments described herein in relation to the processing system, the coffee preparation assembly and/or the coffee preparation system may be applicable to the method and computer program.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides a block diagram of a coffee preparation system according to an example;
FIG. 2 provides a schematic exterior view of a coffee beans-comprising product according to an example; and
FIG. 3 provides a flowchart of a method according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a processing system for controlling a coffee preparation system based on packaging and/or consumer labelling of a given coffee beans-comprising product. The processing system is configured to receive image data obtained by capturing image(s) of the packaging and/or consumer labelling, and to compare the image data to pre-existing image data of packaging and/or consumer labelling of each of a plurality of coffee beans-comprising products. The comparing implemented by the processing system comprises identifying a subset of the plurality of coffee beans-comprising products whose packaging and/or consumer labelling is most similar to that of the given coffee beans-comprising product. The processing system generates, based on the identified subset, at least one output signal for controlling the coffee preparation system.

Also provided is a coffee preparation assembly comprising the processing system and the coffee preparation system.

Further provided is a method and related computer program for controlling such a coffee preparation system.

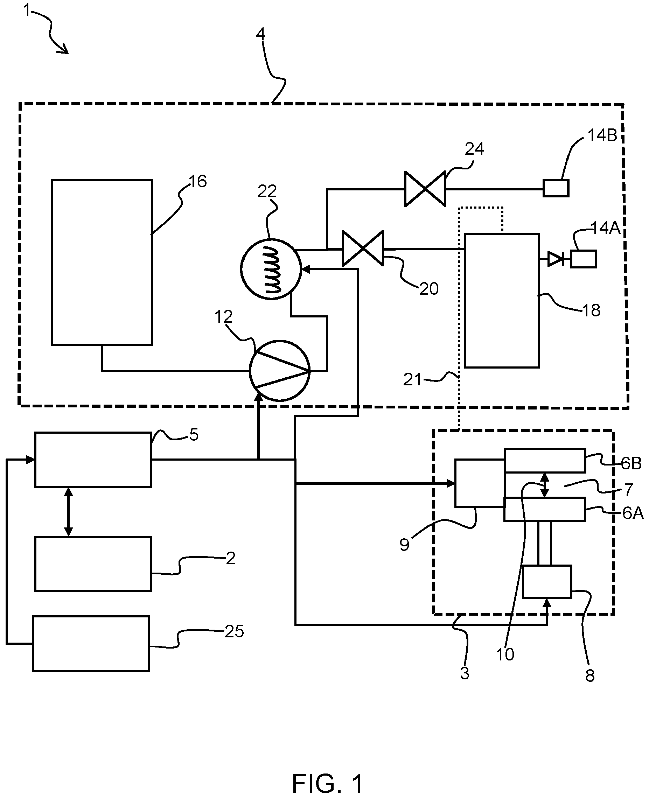

FIG. 1 provides a block diagram of a coffee preparation system 1 according to an example. The coffee preparation system 1 is for implementing one or more steps of a coffee preparation process, for example providing a user with one or more suggestions for preparing coffee, e.g. suggestion(s) for grinding coffee beans and/or brewing coffee.

In some embodiments, the coffee preparation system 1 includes a user interface 2 for providing the user with the suggestion(s) for preparing coffee, a grinding assembly 3 for grinding coffee beans and/or a beverage brewing assembly 4 for brewing coffee, e.g. using coffee beans ground using the grinding assembly 3.

As shown in FIG. 1, a processing system 5 is provided for controlling the coffee preparation system 1. For example, the processing system 5 is configured to control the user interface 2, the grinding assembly 3 and/or the brewing assembly 4.

The processing system 5 and the coffee preparation system 1 can together be included in a coffee preparation assembly. The coffee preparation assembly can be in the form of a beverage machine, with the coffee preparation system 1 and at least part of the processing system 5 being integral components of the beverage machine.

In such embodiments, the beverage machine can include the beverage brewing assembly 4, and optionally the grinding assembly 3.

It is noted that the beverage machine may be used to prepare various different types of beverage, in addition to coffee, such as tea, drinking chocolate, e.g. hot chocolate, etc.

In embodiments in which the coffee preparation assembly 1 is in the form of the beverage machine, the processing system 5 can, for example, comprise processor(s) included in the beverage machine.

Alternatively, the coffee preparation assembly 1 can be in the form of a standalone coffee grinder comprising the grinding assembly 3, with the coffee preparation system 1 and at least part of the processing system 5 being integral components of the coffee grinder.

In such embodiments, the processing system 5 can, for example, comprise processor(s) included in the coffee grinder.

In some embodiments, at least part of the processing system 5 is included in a user device, e.g. a smartphone or tablet computer, provided separately from a beverage machine or coffee grinder. In such embodiments, the processing system 5 may, for example, be included, at least in part, in processor(s) of the user device.

Alternatively or additionally, at least part of the processing system 5 can be included in a cloud-based server. For example, the processing system 5 may be distributed between the cloud-based server, the user device, and one or both of a beverage machine and a coffee grinder.

The user interface 2 can be of any suitable type. In some embodiments, the user interface 2 comprises a display, for example a touchscreen, configured to display suggestion(s) for preparing coffee.

In some embodiments, the selection(s) provided by the user interface 2 is/are user-selectable option(s) for controlling the grinding assembly 3 and/or the beverage brewing assembly 4.

In some embodiments, the user interface 2 is configured to receive user selection(s) made by the user, e.g. selection(s) of one or more of the user-selectable option(s), and the processing system 5 is configured to control the grinding assembly 3 and/or the beverage brewing assembly 4 based on the user selection(s).

In such embodiments, the user interface 2 can, for example, include button(s), dial(s), input functionality of a touchscreen, etc. for receiving the user selection(s).

The user interface 2 can be included, at least in part, in the beverage machine or in the coffee grinder. For example, at least part of the user interface 2 and at least part of the processing system 5 are included in the beverage machine or in the coffee grinder.

Alternatively or additionally, the user interface 2 can be included, at least in part, in the user device, e.g. smartphone or tablet computer. For example, at least part of the user interface 2 and at least part of the processing system 5 are included in the user device.

The grinding assembly 3 can have any suitable design. In some embodiments, such as that schematically depicted in FIG. 1, the grinding assembly 3 comprises a first grinder member 6A and a second grinder member 6B, with a grinding space 7 being defined between the first and second grinder members 6A, 6B.

In such embodiments, coffee beans are grindable in the grinding space 7 defined between the first and second grinder members 6A, 6B.

The first and second grinder members 6A, 6B can be regarded as grinding discs or grinder stones. In at least some embodiments, the first and second grinder members 6A, 6B comprise, e.g. are in the form of, grinder burrs.

The first and second grinder members 6A, 6B can be formed from any suitable material. In some embodiments, the first and second grinder members 6A, 6B are formed from a metallic material, such as a metal or metal alloy, a plastic material, and/or a ceramic material.

One of the first and second grinder members 6A, 6B may be positioned above the other of the first and second grinder members 6B, 6A when the grinding assembly 3 is orientated for use.

In some embodiments, the first, e.g. lower, grinder member 6A is driven, for example driven to rotate, while the second, e.g. upper, grinder member 6B remains static.

Driving of movement, e.g. rotation, of the first and/or second grinder members 6A, 6B can be implemented in any suitable manner. In some embodiments, rotation of the first grinder member 6A and/or the second grinder member 6B is driven by an electrical motor 8 included in the grinding assembly 3.

In some embodiments, the grinding assembly 3 includes an adjustment assembly 9 controllable to adjust distance 10 between the first and second grinder members 6A, 6B.

The distance 10 adjustment may determine a grind size, in other words particle size, to which the coffee beans are ground by the grinding assembly 3.

The beverage brewing assembly 4 may have any suitable design provided that a beverage can be brewed using the beverage brewing assembly 4, for example by contacting liquid, e.g. water, with coffee beans, e.g. coffee beans ground using the grinding assembly 3.

To this end, and referring to FIG. 1, the beverage brewing assembly 4 may include a pump 12 and an outlet 14A through which the brewed beverage is deliverable via a pumping operation of the pump 12.

The pump 12 can have any suitable design. In some embodiments, the pump 12 comprises a vibration pump that includes a pumping member and a solenoid energizable to cause displacement of the pumping member when the pump is actuated.

A pump control system may be configured to receive an electrical signal from a power supply and drive the solenoid, using the electrical signal, to cause displacement of the pumping member. To this end, the pumping member may include a magnetic material, e.g. a ferromagnetic material.

The electrical signal may, for example, be an AC voltage signal provided by a mains power source.

In some embodiments, such as shown in FIG. 1, the beverage brewing assembly 4 comprises a container 16 for containing liquid, e.g. water, and a processing chamber 18. In such embodiments, the pump 12 may be operable to displace the liquid from the container 16 to the processing chamber 18.

The liquid may be displaced to the processing chamber 18 via a valve 20, e.g. an electronic valve, such as a solenoid valve.

The beverage may be brewed in the processing chamber 18 via contacting of a raw material, e.g. ground coffee beans, with the liquid displaced from the container 16 to the processing chamber 18 by the pump 12.

The raw material may be added to the processing chamber 18 in various ways. In some embodiments, such as shown in FIG. 1, the processing chamber 18 is arranged to receive ground coffee beans from the grinding assembly 3, for example via a chute (schematically denoted in FIG. 1 by a dotted line 21) arranged between the grinding assembly 3 and the processing chamber 18.

The processing chamber 18 can also, for example, be arranged to receive the raw material, e.g. ground coffee, in a pre-portioned form, such as in a capsule, pod, pad or the like.

The beverage brewed in the processing chamber 18 may exit the beverage brewing assembly 4 via the outlet 14A.

In some embodiments, such as shown in FIG. 1, the beverage brewing assembly 4 comprises a heater 22 for heating the liquid. In such embodiments, the pump 12 may be arranged to pump the liquid to the heater 22, for instance to heat the liquid as it passes towards the processing chamber 18.

It is noted that a liquid supply system of the beverage brewing assembly 4 can be regarded as including the pump 12, the container 16, the processing chamber 18, and optionally the heater 22.

In some embodiments, such as shown in FIG. 1, the beverage brewing assembly 4 comprises a hot fluid outlet 14B, arranged separately from the processing chamber 18 and the outlet 14A, and through which heated fluid, e.g. hot water and/or steam, is deliverable.

The heated fluid may, for instance, be for the purpose of heating and/or frothing milk in the case of the heated fluid comprising steam and/or preparing other beverages, e.g. tea, in the case of the heated fluid comprising hot water.

The heated fluid, e.g. hot water and/or steam, may pass to the hot fluid outlet 14B via a hot fluid valve 24. The hot fluid valve 24 may, for example, be an electronic valve, such as a solenoid valve.

In some embodiments, such as shown in FIG. 1, the beverage brewing assembly 4 may make use of a single heater 22 for supplying hot liquid, e.g. hot water, of about 90°C to 100°C to the processing chamber 18, and steam of about 140°C (or more) for supplying via the hot fluid outlet 14B. Alternatively, the beverage brewing assembly 4 may include a dedicated heater for generating the heated fluid deliverable via the heated fluid outlet 14B, in addition to the heater 22 arranged to heat the liquid being delivered to the processing chamber 18.

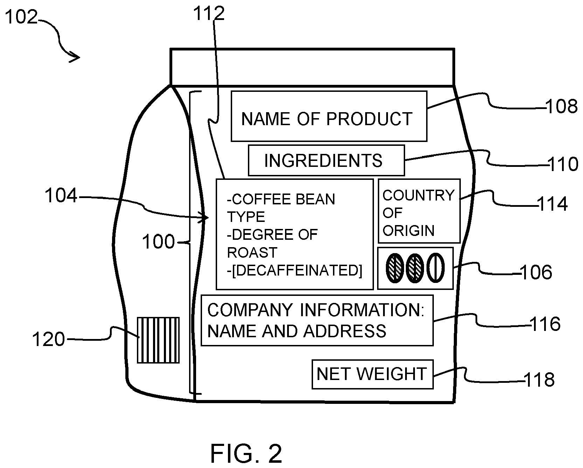

More generally, and referring now to FIGs. 1 and 2, the present disclosure concerns, at least in part, controlling the coffee preparation system 1 based on packaging and/or consumer labelling 100 of a coffee beans-comprising product 102.

The coffee beans-comprising product 102 may include packaging, e.g. a bag, containing the coffee beans, with the consumer labelling 100 being included in the packaging.

The consumer labelling 100 includes, for example, text and/or pictorial representation(s) 104, 106 that visually convey(s) to consumers information relevant to coffee beans included in the product 102. In other words, the text and/or pictorial representation(s) 104, 106 provide information concerning the coffee beans that the consumers are able to receive by looking at the consumer labelling 100 where the product 102 is being sold or when the consumer comes to use the product 102.

Despite the packaging and/or consumer labelling 100 being included in a given coffee beans-comprising product 102, the consumer may struggle to identify the product 102, and in particular can encounter difficulty in understanding characteristic(s) of the coffee beans included in the product 102. This can hamper the consumer's attempts to prepare coffee using the coffee beans included in the product 102.

The processing system 5 is accordingly configured to receive image data obtained by capturing image(s) of (at least part of) the packaging and/or consumer labelling 100, and compare the image data to pre-existing image data of packaging and/or consumer labelling of each of a plurality of coffee beans-comprising products, with the comparing comprising identifying a subset of the plurality of coffee beans-comprising products whose packaging and/or consumer labelling is most similar to that of the given coffee beans-comprising product. The processing system 5 generates, based on the identified subset, at least one output signal for controlling the coffee preparation system 1.

In some embodiments, and referring again to FIG. 1, the image(s) of (at least part of) the packaging and/or consumer labelling 100 is/are captured by a camera 25 included in the coffee preparation assembly, e.g. by a camera included in the beverage machine or standalone coffee grinder.

As an alternative or in addition to using such a camera 25 included in the coffee preparation assembly, the image(s) of (at least part of) the packaging and/or consumer labelling 100 can be captured by a camera 25 included in the user device, e.g. smartphone or tablet computer.

In some embodiments, the at least one output signal comprises at least one brewing assembly control signal for controlling one or more brewing parameters of the beverage brewing assembly 4 based on the identified subset. Thus, brewing parameter(s) can be controlled in light of what is determined by the processing system 5 to constitute the given coffee beans-comprising product 102 that the consumer is intending to use to prepare coffee, e.g. so that the consumer can consume coffee brewed in a manner consistent with that envisaged by the manufacturer of the given coffee beans-comprising product 102.

In some embodiments, the processing system 5 is configured to control the brewing parameter(s) by controlling the pump 12, the heater 22 and/or valve(s) 20 included in the beverage brewing assembly 4 using the brewing assembly control signal(s) generated based on the identified subset.

The one or more brewing parameters can, for example, include at least one selected from a brew time, a pre-infusion time, a quantity, e.g. volume, of water, a temperature of the water, a flow rate of the water, a temperature-flow profile, and a pressure of the water used to brew the beverage using the coffee beans of the given coffee beans-comprising product 102. Controlling such brewing parameters can assist brewing of coffee in a manner consistent with what is determined by the processing system 5 to constitute the given coffee beans-comprising product 102 that the consumer is intending to use to prepare coffee.

For example, the coffee beans included in the given coffee beans-comprising product 102 may be dark roast coffee beans apposite for brewing an espresso. In such a non-limiting example, the brewing parameter(s) may be selected, based on the identified subset indicating dark roast coffee beans being included in the given coffee beans-comprising product 102, to prepare an espresso, in other words using a volume of water (e.g. 29.5 to 37 mL for a single shot), a temperature of the water (e.g. between 92°C and 96°C), and a pressure of the water (e.g. about 9 bar) selected for preparing an espresso.

In some embodiments, the brewing assembly control signal(s) that control(s) the pump 12 and/or valve(s) 20 included in the beverage brewing assembly 4 can control (at least) the quantity and the pressure of the water used to brew the beverage.

It is noted that control over the pump 12 is schematically represented in FIG. 1 by the arrow extending from the box denoting the processing system 5 to the box denoting the pump 12.

In some embodiments, such control over the pump 12 and/or valve(s) 20 can assist to control temperature of the water, since the rate at which water is supplied to the heater 22 can, at least partly, determine the temperature to which the water is heated. Alternatively or additionally, controlling the temperature of the water can be implemented by controlling the heater 22 (see, for example, the arrow in FIG. 1 extending from the box denoting the processing system 5 to the circular symbol denoting the heater 22).

As an alternative or in addition to controlling the beverage brewing assembly 4, the at least one output signal can comprise at least one grinding assembly control signal for controlling one or more grinding parameters of the grinding assembly 3 based on the identified subset. Thus, grinding parameter(s) can be controlled in light of what is determined by the processing system 5 to constitute the given coffee beans-comprising product 102 that the consumer is intending to use to prepare coffee, e.g. so that the coffee beans are ground in a manner consistent with that envisaged by the manufacturer of the given coffee beans-comprising product 102.

For example, the identified subset may be associated with a size of beverage envisaged for the coffee beans included in the packaging, and an amount of ground coffee provided by the grinding assembly 3 for preparing a beverage of that size may be based on the thus indicated size of the beverage, e.g. in common with the quantity of water used by the beverage brewing assembly 4 for brewing the beverage.

The amount of ground coffee provided by the grinding assembly 3 can be controlled by, for example, controlling a grind time during which the grinding assembly 3 is grinding the coffee beans. For example, the grinding assembly control signal(s) can comprise a motor control signal that controls the electrical motor 8 to rotate the grinding member(s) 6A, 6B for a time period corresponding to the grind time.

Alternatively or additionally, the identified subset may be associated with a light roast for which a smaller particle size is envisaged from grinding of the coffee beans. Conversely, the identified subset may be associated with a dark roast for which a larger particle size is envisaged from grinding of the coffee beans.

The grind size to which the coffee beans are to be ground by the grinding assembly 3 can be controlled by, for example, controlling the adjustment assembly 9 to adjust the distance 10 between the first and second grinder members 6A, 6B.

In some embodiments, the grinding assembly control signal(s) generated by the processing system 5 may control the adjustment assembly 9 to adjust the distance 10 between the first and second grinder members 6A, 6B based on the identified subset.

Alternatively or additionally, the adjustment assembly 9 may be user-adjustable to adjust the distance 10 between the first and second grinder members 6A, 6B, with the suggestion(s) provided via the user interface 2 including a recommendation for how to adjust the adjustment assembly 9 based on the identified subset.

In more general terms, the one or more grinding parameters, controllable based on the identified subset, may include a grind size to which the coffee beans are to be ground by the grinding assembly 3, a grind time during which the coffee beans are ground by the grinding assembly 3 and/or an amount of ground coffee provided by the grinding assembly 3.

In some embodiments, the at least one output signal comprises one or more user interface control signals for controlling the user interface 2 to provide one or more suggestions for preparing coffee, with the suggestion(s) being provided based on the identified subset. Thus, the user can be guided, via the suggestion(s), to prepare coffee, e.g. to grind the coffee beans and/or to brew coffee in light of what is determined by the processing system 5 to constitute the given coffee beans-comprising product 102 that the consumer is intending to use to prepare coffee, e.g. in a manner consistent with that envisaged by the manufacturer of the product 102.

The form of the suggestion(s) is not particularly limited. In some embodiments, the one or more suggestions is/are in the form of user-selectable option(s) for controlling the grinding assembly 3 and/or the beverage brewing assembly 4. In such embodiments, the processing system 5 may control the grinding assembly 3 and/or the beverage brewing assembly 4 based on the user-selectable option(s) selected by the user via the user interface 2.

Alternatively or additionally, the one or more suggestions can include a recommendation as to which bean container, of a plurality of different bean containers included in the coffee preparation system 1, e.g. in the beverage machine or the standalone coffee grinder, to fill with the coffee beans of the product 102.

Such a recommendation can assist the user to transfer the coffee beans of the given coffee beans-comprising product 102 to the bean container most suited to the coffee beans of the product 102, for example based on similarity of coffee bean type, degree of roasting or decaffeination level (e.g. decaffeinated or not decaffeinated) to coffee beans that the processing system 5 takes to be already contained in the bean container.

It is noted that the subset of the plurality of coffee beans-comprising products identified to be most similar to that of the given coffee beans-comprising product 102 can be a single coffee beans-comprising product of the plurality of coffee beans-comprising products whose packaging and/or consumer labelling 100 is identified to be most similar to that of the given coffee beans-comprising product 102.

In other cases, the subset of the plurality of coffee-beans comprising products is a group of coffee-beans comprising products whose number is less than a total number of the plurality of coffee-beans comprising products. In such embodiments, the group may, for instance, be presented to the consumer, e.g. in the form of a plurality of user-selectable options provided via the user interface 2, and the consumer may select the coffee beans-comprising product of the group that corresponds, or at least most closely corresponds, to the given coffee beans-comprising product 102.

It is noted that the pre-existing image data can be accessed from website(s) and/or can be pre-stored in a database.

For example, a database comprising the pre-existing image data can be found at website(s) of retailer(s).

The generating of the control signal(s) can make use of the identified subset in any suitable manner. In some embodiments, the pre-existing image data is included in a database, which database further comprises stored information relevant to coffee beans included in each of the plurality of coffee beans-comprising products. In such embodiments, the processing system 5 may be configured to generate the at least one output signal for controlling the coffee preparation system 1 based on the stored information for the identified subset.

The database can be generated in any suitable manner. In some embodiments, the database is generated in a web scraping process in which the image data, e.g. together with the stored information relevant to the coffee beans, is obtained from the worldwide web.

Alternatively or additionally, the database can be updated and/or completed using image data acquired from the image data gathered as a result of the user previously capturing images of coffee-beans comprising product(s) 102.

In some embodiments, an algorithm may be used to fill the database with the pre-existing image data together with stored information relevant to the coffee beans included in each of the plurality of coffee beans-comprising products. In such embodiments, the algorithm may include a web scraping algorithm for performing the web scraping process.

In some embodiments, the processing system 5 is configured to extract at least one coffee bean characteristic of the coffee beans based on the identified subset, and to generate the at least one output signal based on the at least one coffee bean characteristic.

The stored information for the identified subset can include, for example, the at least one coffee bean characteristic of the coffee beans of the identified subset.

Extracting the coffee bean characteristic(s) of the identified subset can mean that characteristic(s) pertinent to grinding and/or brewing factor(s) for the coffee beans included in the given coffee beans-comprising product 102 can be determined and used to control the coffee preparation system 1.

The at least one coffee bean characteristic can comprise, for example, one or more selected from a coffee bean type, e.g. Arabica, Robusta or blend, a flavor descriptor indicative of a flavor of the coffee beans, a degree of roasting or roast level descriptor(s), a flavor intensity, an oil content, a country of origin, and a level of decaffeination, e.g. an indication of whether or not the coffee bean is decaffeinated. Such coffee bean characteristics may be particularly relevant in terms of determining how coffee should be prepared, e.g. the manner in which coffee beans are ground and/or coffee is brewed.

The coffee bean type can, for example, be indicated by "100% Arabica"/single origin.

It is also noted, referring again to FIG. 2, that the packaging and/or consumer labelling 100 can include various text portions, for example one or more of the following: name of product 108, ingredients 110, coffee bean characteristic(s) 112, country of origin 114, company information regarding the manufacturer 116, including name and address of the company, and net weight 118.

The packaging and/or consumer labelling 100 can include various non-text elements, for example non-text elements that visually convey to consumers information relevant to coffee beans included in the product 102, such as the pictorial representation(s) 106, and non-text elements, e.g. a barcode 120, that do not visually convey any information to consumers.

It is also noted that alphanumeric text, such as a code comprising letters and/or numbers may be included in the packaging and/or consumer labelling 100 but may not visually convey any information to consumers due to the code containing no legible words.

Thus, some of the text 104, e.g. some of the text portions 104, can visually convey to consumers information pertinent to grinding and/or brewing factor(s) for the coffee beans included in the product 102, whereas other parts of the text 104, e.g. other text portions 104, may not convey such information (despite being generally relevant to the coffee beans included in the product 102).

The identifying of the subset can be implemented in any suitable manner, e.g. using any suitable image comparison algorithm. In some embodiments, the processing system 5 is configured to compare text, color(s), and/or layout of the packaging and/or consumer labelling 100 of the (at least part of the) given coffee beans-comprising product 102 captured in the image data to text, colors and/or layout of the packaging and/or consumer labelling 100 of the plurality of coffee beans-comprising products as provided in the pre-existing image data, and identify the subset based on this comparison.

Alternatively or additionally, the processing system 5 can be configured to identify the subset by generating a similarity score for each of the plurality of coffee beans-comprising products and determining which similarity score(s) is/are highest.

In some embodiments, the processing system 5 is configured to use a first layer of a convolutional neural network (convolutional layer) to reduce the number of parameters to be learned/used in the comparison.

In such embodiments, the features of the image data can then be used to compare with a list of features from the database, and the coffee beans-comprising product with the highest similarity score can be determined as corresponding to the given coffee beans-comprising product 102.

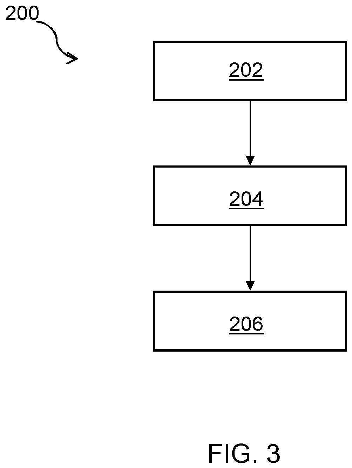

The present disclosure further provides, referring now to FIG. 3, a method 200 of controlling a coffee preparation system 1 based on packaging and/or consumer labelling 100 of a given coffee beans-comprising product 102. The method 200 comprises receiving 202 image data obtained by capturing image(s) of (at least part of) the packaging and/or consumer labelling 100, comparing 204 the image data to pre-existing image data of packaging and/or consumer labelling of each of a plurality of coffee beans-comprising products, the comparing comprising identifying a subset of said plurality of coffee beans-comprising products whose packaging and/or consumer labelling is most similar to that of the given coffee beans-comprising product, and generating 206, based on the identified subset, at least one output signal for controlling the coffee preparation system 1.

The method 200 may be performed by the processing system 5 configured as described in relation to any of the embodiments described herein.

Further provided is a computer program comprising computer program code which is configured, when the computer program is run on a processing system 5, to cause the processing system 5 to implement the method 200 according to any of the embodiments described herein.

In some embodiments, the computer program may be included in an application, in other words an app, for running on the user device, e.g. smartphone or tablet computer.

The user may, for example, use the (newly) bought product 102 to identify what the new beans are so the coffee preparation system 1, e.g. beverage machine, can be adjusted to get the most out of the beans.

A key feature of the present disclosure can be regarded as transformation of an image of the beans packaging, or more generally the packaging and/or consumer labelling 100, to specific settings for the coffee preparation system 1, e.g. the beverage machine. The transformation can be implemented via use of an algorithm, for instance an algorthm embedded in an app.

For instance, the user may be asked via the user interface 2 to provide a photographic image of the bag of coffee beans used. This photographic image can be made using the aforementioned app, or alternatively using a camera included in the beverage machine.

Using this photographic image, the algorithm may compare the photographic image with the pre-existing image data, e.g. from a database of photographic images provided at website(s) of retailer(s). The photographic image from the database with the highest similarity to the photographic image taken of the bag of coffee beans can then be used to identify the beans included in the bag of coffee beans.

In this non-limiting example, a (further) algorithm may have filled the database with the photographic images and information about the beans inside the bags. The stored information can include, but is not limited to: the type of bean (e.g. Arabica or Robusta), caffeinated/decaffeinated, and/or degree of roasting of the beans.

When these aspects of the beans included in the bag of coffee beans are known, the algorithm can then define (e.g. with the help of a database and/or based on knowledge internal to the algorithm) coffee preparation settings (including, but not limited to grind size, brew temperature, brew time, coffee weight/grind time, etc.) to prepare the coffee.

The user can be provided with these settings as a recommendation for adaptation by the user (for instance with a manual grinder adjustment setting) or the settings can be applied automatically without user intervention. Another option can be to recommend to the user the recipes for which the coffee bean type is most suitable (e.g. milk drinks, espresso/ lungo, cold brew, etc.).

The following protocol is provided by way of a further non-limiting illustrative example: when a given new coffee beans-comprising product 102, e.g. bag of coffee beans, is purchased and inserted in the beverage machine, the app asks to take a photograph of the packaging, or more generally a photograph of the packaging and/or consumer labelling 100 of the given new coffee beans-comprising product 102, for example the app opens the camera user interface of the user's user device, and the user is asked to control the user device's camera 25 to take a photographic image of the packaging inside the framework displayed on the screen (e.g. to only capture the bag and no other external characters); the app then uses the thus captured photographic image(s) as input for a comparison algorithm, which comparison algorithm uses a first layer of a convolutional neural network (convolutional layer) to reduce the number of parameters to be learned (this step can compress comparable features of the data and enhance speed of the algorithm), the features of the captured photographic image are then used to compare with a list of features from a database; the match with the highest similarity score can be used to determine the given coffee beans-comprising product 102, e.g. the information relating to coffee beans thereof; the algorithm determines settings for the coffee to be brewed based on the available information from the database; and the settings can be shared with the user for verification, e.g. via the user interface 2, and/or translated to coffee preparation settings for the coffee preparation system 1, e.g. the beverage machine.

The processing system 5 can be implemented in numerous ways, with software and/or hardware, to perform the various functions required. A processor is one example of a processing system 5 which employs one or more microprocessors that may be programmed using software (e.g. microcode) to perform the required functions. A processing system 5 may however be implemented with or without employing a microprocessor, and also may be implemented as a combination of dedicated hardware to perform some functions and a processor (e.g., one or more programmed microprocessors and associated circuitry) to perform other functions.

Examples of processing system 5 components that may be employed in various embodiments of the present disclosure include, but are not limited to, conventional microprocessors, application specific integrated circuits (ASICs), and field-programmable gate arrays (FPGAs).

In various implementations, a processor or processing system 5 may be associated with one or more storage media such as volatile and non-volatile computer memory such as RAM, PROM, EPROM, and EEPROM. The storage media may be encoded with one or more programs that, when executed on one or more processors and/or the processing system 5, perform the required functions. Various storage media may be fixed within a processor or processing system 5 or may be transportable, such that the one or more programs stored thereon can be loaded into a processor or processing system 5.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method (200) of controlling a coffee preparation system (1) based on packaging and/or consumer labelling (100) of a given coffee beans-comprising product (102), the method comprising:
receiving (202) image data obtained by capturing image(s) of at least part of the packaging and/or consumer labelling;
comparing (204) the image data to pre-existing image data of packaging and/or consumer labelling of each of a plurality of coffee beans-comprising products, the comparing comprising identifying a subset of said plurality of coffee beans-comprising products whose packaging and/or consumer labelling is most similar to that of the given coffee beans-comprising product; and
generating (206), based on the identified subset, at least one output signal for controlling the coffee preparation system.

2. The method (200) according to claim 1, wherein the pre-existing image data is included in a database, the database further comprising stored information relevant to coffee beans included in each of the plurality of coffee beans-comprising products, the generating (206) the at least one output signal being based on the stored information for the identified subset.

3. The method (200) according to claim 1 or claim 2, comprising extracting at least one coffee bean characteristic of the coffee beans of the identified subset, the generating (206) the at least one output signal being based on the at least one coffee bean characteristic.

4. The method (200) according to claim 3, wherein the at least one coffee bean characteristic comprises one or more selected from a coffee bean type, a flavor descriptor indicative of a flavor of the coffee beans, a degree of roasting or roast level descriptor(s), a flavor intensity, an oil content, a country of origin, and a level of decaffeination.

5. The method (200) according to any one of claims 1 to 4, wherein the at least one output signal comprises at least one brewing assembly control signal for controlling one or more brewing parameters of a beverage brewing assembly (4) based on the identified subset.

6. The method (200) according to claim 5, wherein the one or more brewing parameters include at least one selected from a brew time, a pre-infusion time, a quantity of water, a temperature of water, a flow rate, a temperature-flow profile, and a pressure of water used to brew a beverage using the coffee beans of the given coffee beans-comprising product (102).

7. The method (200) according to any one of claims 1 to 6, wherein the at least one output signal comprises at least one grinding assembly control signal for controlling one or more grinding parameters of a grinding assembly (3) for grinding coffee beans based on the identified subset.

8. The method (200) according to claim 7, wherein the one or more grinding parameters include a grind size to which the coffee beans are to be ground by the grinding assembly (3), a grind time during which the coffee beans are ground by the grinding assembly and/or an amount of ground coffee to be provided by the grinding assembly.

9. The method (200) according to any one of claims 1 to 8, wherein the at least one output signal comprises one or more user interface control signals for controlling a user interface (2) to provide one or more suggestions for preparing coffee, the suggestion(s) being provided based on the identified subset.

10. The method (200) according to claim 9 as according to any one of claims 5 to 8, wherein the one or more suggestions is/are in the form of user-selectable options for controlling the beverage brewing assembly (4) and/or the grinding assembly (3).

11. The method (200) according to claim 9 or claim 10, wherein the one or more suggestions include(s) a recommendation as to which bean container, of a plurality of different bean containers included in the coffee preparation system (1), to fill with the coffee beans of the given coffee beans-comprising product (102).

12. The method (200) according to any one of claims 1 to 11, wherein the comparing (204) comprises using an image comparison algorithm to compare text (104), color(s), and/or layout of the packaging and/or consumer labelling (100) of the at least part of the given coffee beans-comprising product (102) captured in the image data to text, colors and/or layout of the packaging and/or consumer labelling of the plurality of coffee beans-comprising products as provided in the pre-existing image data.

13. A computer program comprising computer program code which, when executed on a computing device having a processing system (5), causes the processing system to perform the method (200) according to any one of claims 1 to 12.

14. A processing system (5) for controlling a coffee preparation system (1) based on packaging and/or consumer labelling (100) of a given coffee beans-comprising product (102), the processing system being configured to:
receive (202) image data obtained by capturing image(s) of at least part of the packaging and/or consumer labelling;
compare (204) the image data to pre-existing image data of packaging and/or consumer labelling of each of a plurality of coffee beans-comprising products, the comparing comprising identifying a subset of said plurality of coffee beans-comprising products whose packaging and/or consumer labelling is most similar to that of the given coffee beans-comprising product; and
generate (206), based on the identified subset, at least one output signal for controlling the coffee preparation system.

15. A coffee preparation assembly comprising:
the processing system (5) according to claim 14; and
a coffee preparation system (1) controllable by the at least one output signal generated by the processing system; optionally wherein the coffee preparation system comprises a beverage brewing assembly (4) and/or a grinding assembly (3) for grinding coffee beans, the beverage brewing assembly and/or the grinding assembly being controllable by the at least one output signal.
